# EUROPEAN PATENT APPLICATION

(11) **EP 1 542 148 A1**
(43) Date of publication of application: **15.06.2005**
(21) Application number: 04257355.0
(22) Date of filing: 26.11.2004
(51) Int. Cl.: G06F 17/60

(54) **Method for analyzing process variables**

(30) Priority: 12.12.2003 US 529339 P
(71) Applicant: Rohm and Haas Company, Philadelphia, Pennsylvania 19106-2399 (US)
(72) Inventor: Kopas, Dale Andrew, Sewell New Jersey 08080 (US)
(74) Representative: Buckley, Guy Julian

(57) **Abstract**

A method of monitoring and assessing production processes is described that is target value based using a quality index.

## Description

The present invention relates to methods for evaluating product quality control associated with chemical products prepared from chemical manufacturing processes. More particularly, the invention is directed to method for target based quality monitoring of production batch processes.

In any chemical manufacturing process, quality control and monitoring of finished chemical products prepared by production batch processes is of critical concern to the manufacturer. A manufacturing company typically produces many different products to meet specific customer needs. Companies producing waterborne coatings are no exception to this general rule. In addition, increasingly exacting quality requirements as specified by customers are now considered standard. The quality of one unit of production or batch is determined by a set of measured characteristics or properties for that product. The company may organize its products into business entities based on markets, similarity of product, production location, and so on. Managers, technical experts, and quality assurance and assesment/quality control personnel will want to rapidly monitor product and process quality and set improvement priorities based on quality performance as viewed from their particular domain of responsibility. The ability to 'view' the company from different perspectives and different levels of 'aggregation' is a common feature of systems involving the financial performance of the company. In such a system, managers with different functional duties or responsibility levels are able to obtain financial information aggregated consistently with their decision making domain. The roll-up and break-down of financial information is straight forward because all data are recorded and expressed in the same units, namely money.

For example, there are a number of problems associated with the manufacture of emulsion polymers, which include but are not limited to, for example incorrect polymer products, mislabeled products, contaminated polymer products, contaminated raw materials, mischarge of one or more monomers, incorrect weight percent polymer solids, incorrect degree of neutralization, mischarge of reagents and minor additives and combinations thereof. Any method for evaluating quality control in a chemical manufacturing process must be reliable and sufficiently easy to operate and understandby laboratory, technical and plant personnel.

One particularly difficult problem in the manufacture of chemical products, including emulsion polymers, is to reliably and tangibly monitor quality control of production batch processes. Traditional methods for monitoring product quality of batch processes have involved classification of the batch as either in-specification (*i.e.* meets all product property defined requirements expressed generally in terms of a specification range, for example, a stormer viscosity of 90 - 95 KU), or out-of-specification for one or more properties. Other measures, such as process capability expressed in terms of Cp or Cpk, are also now widely used to monitor product quality. As a result of Six Sigma™ and earlier improvement programs, such as Total Quality Management (TQM), Cpk's of 1.33 or greater are demanded for key properties like stormer and ICI viscosity, gloss, tint strength, grit levels, particle size, and so on. It is desirable , however, to provide other approaches to monitoring the quality of production batch processes, based on deviation from a specified target values. The merits of this method to monitor and assess product quality vs. % in-spec, or Cp/Cpk, are also desirable and of significant utility.

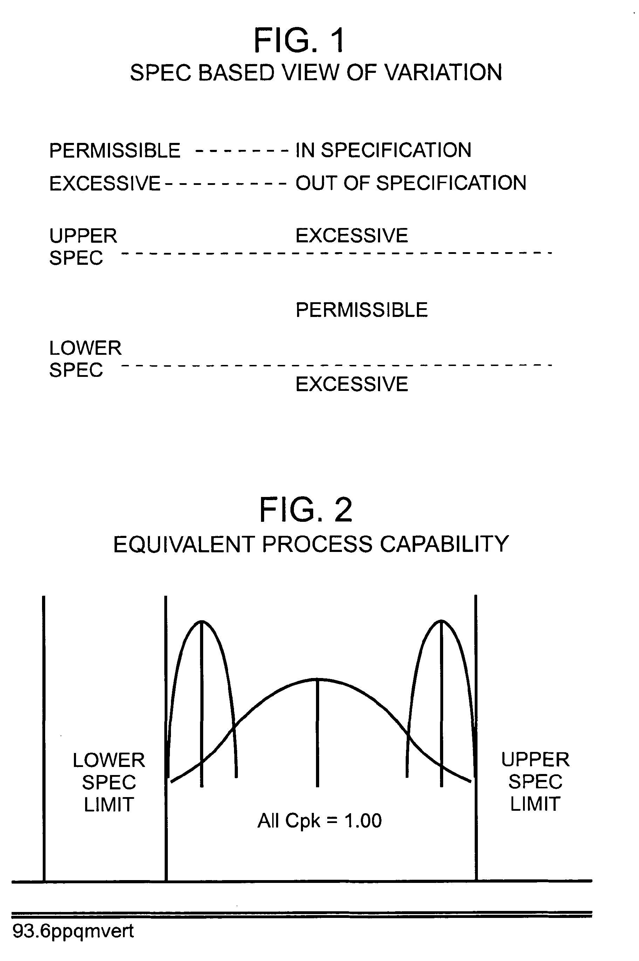

Inventors have discovered a surprisingly effective and reliable method for target based quality monitoring and control of production batch processes. The method provides effective and reliable quality control (QC) and quality monitoring of chemical product manufactured in plants which routinely prepare a plurality of batches of a particular chemical product. Using a deviation from target approach based on a specific type of loss function, we convert product property measurements, initially having a variety of different measurement units, into unitless quantities called the 'quality index', or Q.I.. The quality index has consistent meaning for all product properties on all products. This allows for easy combination of quality measurements from many different perspectives. A consistently defined quality index provides a means to address, for example, the following:
1. Are the company's quality improvement programs and efforts having an effect on aggregate product quality ?
2. Are two or more manufacturing locations making the same set of products with equal consistency.
3. Has the addition of capital improvements to equipment or employee training had an impact on product quality ?
Each of these questions are difficult to answer with existing quality monitoring techniques because there are no previously available techniques for combining quality performance data having many different measurement units. In some instances, the measured product properties are converted to discrete evaluations to allow for aggregation and comparison. In other words, a batch is manufactured, and the measured properties, including but not limited to for example pH, viscosity, particle size, solids, and gel, are compared individually to the specifications for that product. If all measured properties meet their established specifications, then that batch is classified as satisfactory. A strategy such as this has two main shortcomings:
1. It perpetuates the attitude that any value within the specification range is equally good with respect to customer satisfaction (ref. Figure 1).
2. As the percent satisfactory approaches 100 %, it is difficult to motivate improvement and continued reduction in variability.
Statistically based alternatives to percent satisfactory have been used in a number of industries such as automotive, aerospace, and the chemicals and coatings industries. Various process capability indices, such as Cp and Cpk, are among these alternatives and are widely used to monitor product quality improvement and communicate it both within the company and to customers as well. Although a valuable metric, issues associated with using Cpk as a measure of quality include:
1. Assumptions of process stability and normality are required if the index is to be considered valid, i.e. it is not robust to departures from either of these.
2. It is not target-based and therefore can fail to distinguish between off-target and on-target processes (ref. Figure 2) , and
3. Widening the specifications can improve Cpk dramatically.

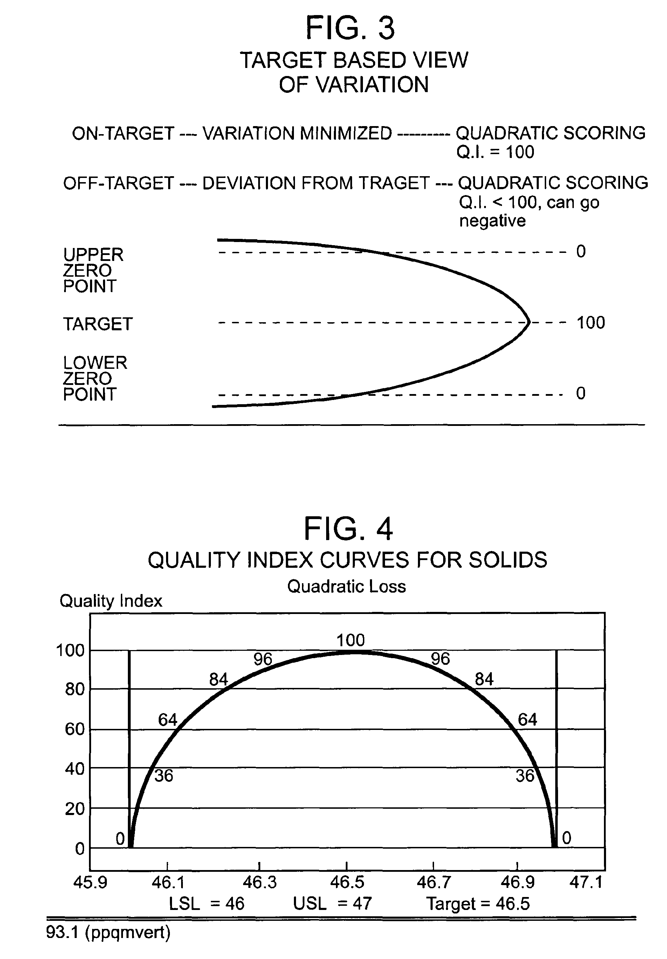

In order to create a product quality monitoring system with the required flexibility to view quality at many different levels, the definition of quality index is made at the level of a single product property measurement at the batch level. Three parameters are necessary to define the quality index - the target value of the property (T), and the values above and below the target value at which the quality index takes the value zero. We call these latter quantities the Upper Zero Point (UZP) and the Lower Zero Point (LZP), which frequently correspond to the Upper and Lower specification limits for a given property. Once these quantities have been defined, we use a specified inverse quadratic loss function to transform the individual property measurement into a unitless quality index (ref. Figure 3).

Accordingly, the invention provides a method of monitoring and assessing production batch processes comprising the steps of :
(a) defining a quality index based upon parameters comprising: (i) a target value of the property, (ii) values below the target value of the property and (iii) values above the target value of the property; and
(b) applying a specified inverse quadratic loss function to transform each individual property measurement into a unitless quality index;
wherein the quality index takes on a maximum value of 100 when the test result is exactly on target, and its value decreases quadratically to negative infinity as the property moves farther away from target.

According to one embodiment the method is automated. According to a separate embodiment the process is used to monitor continuous productionprocesses.

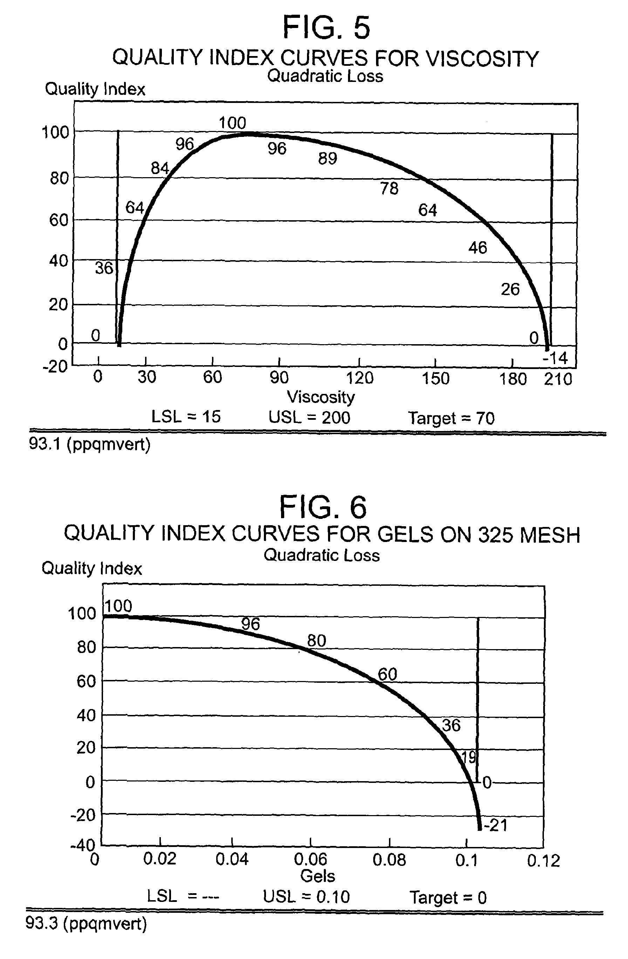

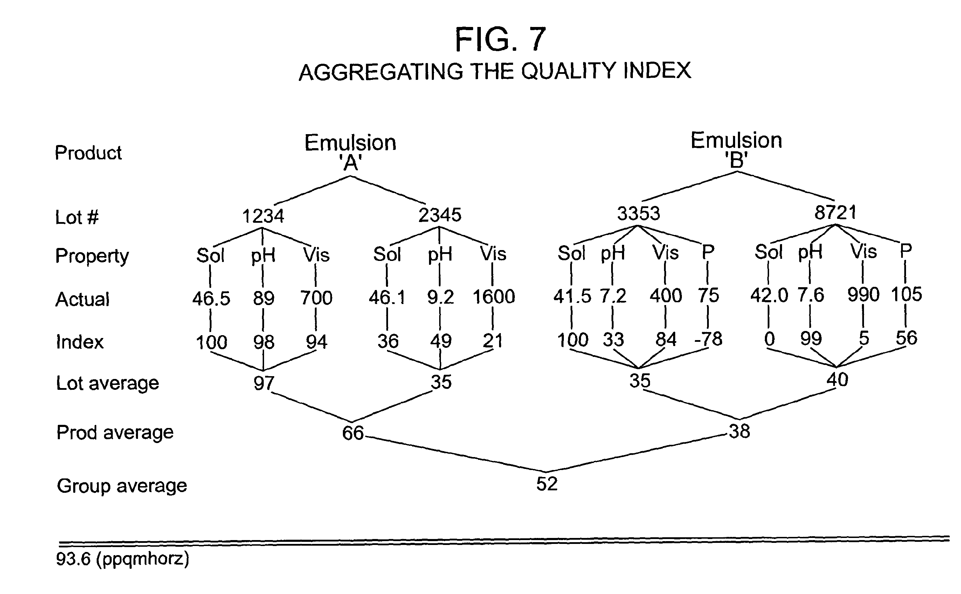

The quality index takes on a maximum value of 100 when the test result is exactly on target, and its value decreases quadratically to negative infinity as the property moves farther away from target; but we arbitrarily stop the decrease at -999 to give the plants a break. The quality index is a unitless quantity. If we set the zero points so that the shape of the loss function has a consistent relationship to economic loss from one property to another, the Q.I. may be used to make valid comparisons across dissimilar properties and products. The next three graphics illustrate typical loss functions for three measured product properties of interest in the chemical industry. The first (ref. Figure 4) represents a symmetric case, where the target is centered in the specification range. In the second graphic (ref. Figure 5), the target is off-center because values nearer the lower specification allow for easier handling of the product during loading and unloading. The third (ref. Figure 6) is an example of a one-sided specification where the ultimate goal would be to have a value of zero, i.e. less is better, such as with batch gel levels or residual monomer. We set the target somewhat above zero to accommodate limits of detection with current measurement methods. Conversely, if anything below a given value is considered equally good (i.e. < 0.02 grams/qt. Gel on a 325 mesh screen), then we could set the target and lower zero point appropriately to yield a Q.I. of 100 for test result at or below the target.

Since the quality index is a unitless value, individual Q.I.s can be combined into an Average Quality Index (A.Q.I.) using either a simple arithmetic average or a weighted average of the property values. Weights are applied to every property based on the criticality of that property, with higher weights given to properties that have a greater impact on end product performance. A.Q.I.s can also be calculated at different levels of aggregation (ref. Figure 7). The A.Q.I.s can also be plotted in the form of a run chart to determine if there is indeed an improvement in consistency over time, i.e. a trend in values towards 100.

Consistency over time is measured at any stage of the process, but we concentrate on 1^{st} pass (i.e. prior to any adjustment or filtration of the just completed batch) and final shipments (i.e. just before shipment to the customer). And although all of the necessary calculations are performed in an Excel spreadsheet, we developed our own software that both calculates the Q.I.s and A.Q.I.s and also graphically displays the results. We call this package the Product/Process Quality Measurement (PPQM) system, which is used as a management decision tool for the prioritization of improvement opportunities and the monitoring of product and process quality. In its present stage of implementation, the system focuses on product quality in terms of those measured properties for which defined specifications are available; but it can also be used to gauge the consistency of a process using measured process inputs such as temperature, dispersion time, current draw, or feed rates, for example. Raw material consistency is also be monitored with the system.

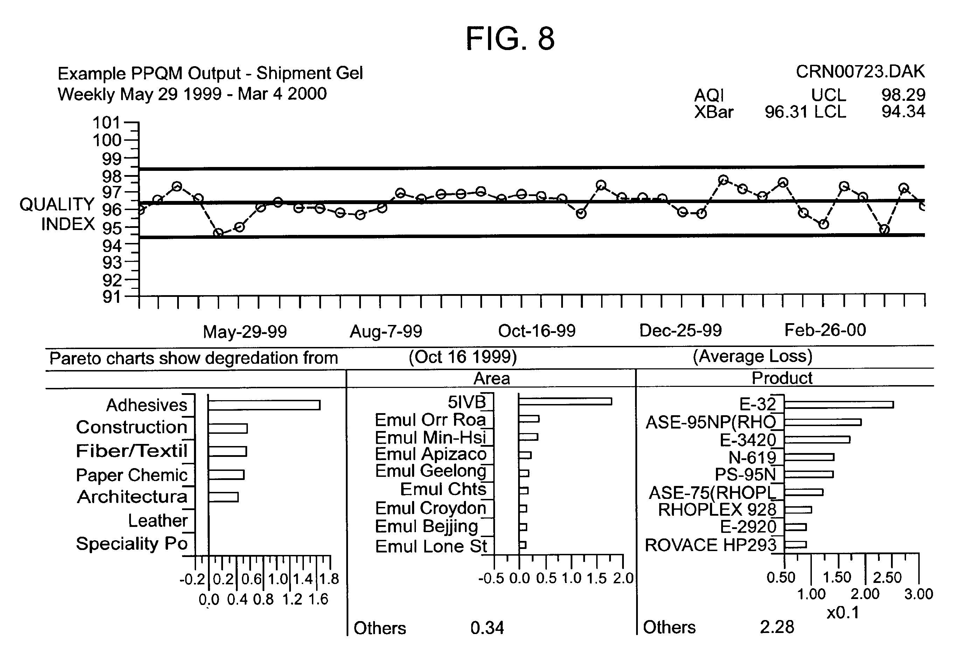

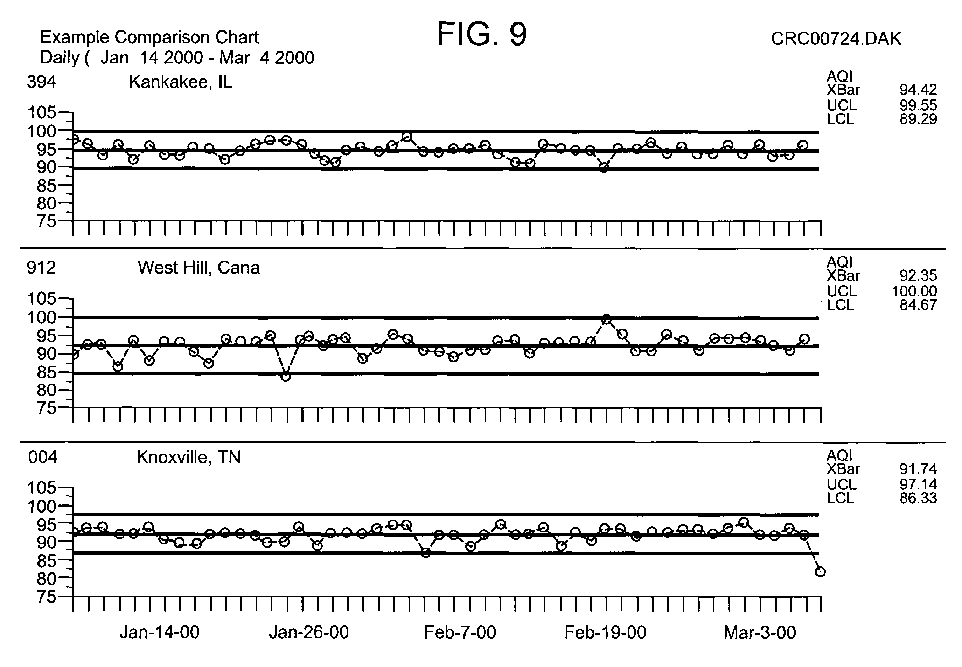

The system provides great flexibility for examination of product quality at many different levels of aggregation. The possibilities range from a Regional view of the data to the examination of an individual product-property. The quality index provides a mechanism to combine data across dimensions and examine the Average Quality Index over time. To facilitate this type of analysis, the PPQM system presents the Average Quality Index in the form of a control chart (ref. Figure 8). The control chart presentation allows the monitoring of quality for continuous improvement and provides a management tool for deciding when unusual events present opportunities for immediate improvement. Below each control chart is a series of Pareto charts. These charts help to prioritize the longer term improvement opportunities by showing the loss in product quality (i.e. consistency) that may be attributed to business entities or locations or individual products or individual properties. Both total loss and average loss, which takes volume into account, can be displayed to get a complete picture of where to improve. The system also permits comparisons within dimensions such as between manufacturing locations, kettle to kettle, and so on (ref. Figure 9). Lastly, we can 'peel back the onion' to determine exactly where the greatest loss in consistency is occurring, or quantify the loss due to deviation from target, within plant , or between plant variability.

One advantage, as a result of using the method of the invention, is that we have seen steady improvement in the overall Average Quality Index of our waterbased emulsion products, with A.Q.I.s of over 90 vs. A.Q.I.s of less than 80 when the program was first started. And although this cannot be attributed solely to PPQM since it is, like any other metric, a monitoring tool, without it we feel that our improvement efforts would have lacked necessary direction and attention, and therefore would not have been as successful as planned.

Suitable chemical products analyzed by the method of the invention include, but are not limited to, vinyl polymers such as polystyrene, polystyrene copolymers polyvinylacetate, polyvinylpyridines, polyvinylamines, polyvinylamides, polyvinyl ethers, condensation polymers such as polyesters and polyurethanes, polyethylenically unsaturated polymers such as polyethylene, polypropylene, poly(meth)acrylates, poly(meth)acrylate copolymers, polyalkyl(meth)acylates, polyalkyl(meth)acrylate copolymers, polyhydroxyakyl(meth)acrylates, polyacrylonitrile, polyacrylonitrile copolymers, polyacrylamide, poly(meth)acrylamide and poly(meth)acrylamide copolymers. Other suitable examples of water insoluble polymers include cross-linked polymers of the polymers listed.

Water insoluble acrylic polymers useful in the invention are prepared by conventional polymerization techniques including sequential emulsion polymerization. Dispersions of the latex polymer particles are prepared according to processes including those disclosed in U.S. Patent Nos. 4,427,836; 4,469,825; 4,594,363; 4,677,003; 4,920,160; and 4,970,241. The latex polymer particles may also be prepared, for example, by polymerization techniques disclosed in European Patent Applications EP 0 267 726; EP 0 331 421; EP 0 915 108 and U.S. Patent Nos. 4,910,229; 5,157,084; 5,663,213 and 6,384,104.

As used herein, the term "(meth)acrylic" refers to either the corresponding acrylic or methacrylic acid and derivatives; similarly, the term "alkyl (meth)acrylate" refers to either the corresponding acrylate or methacrylate ester.

Some embodiments of the invention are described in detail in the following Examples.

### Example 1

Please refer to Figure 1, which illustrates that any value within the specification range is equally good with respect to customer satisfaction.

### Example 2

Please refer to Figure 2, which illustrates any method that does not used target based monitoring production of batch processes fails to distinguish between off-target and on-target processes.

### Example 3

Please refer to Figure 3, which illustrates a specified inverse quadratic loss function used to transform the individual property measurement into a unitless quality index.

### Example 4

Please refer to Figure 4, which illustrates a symmetric case, where the target is centered in the specification range.

### Example 5

Please refer to Figure 5, which illustrates a case where the target is off-center because values nearer the lower specification allow for easier handling of the product during loading and unloading.

### Example 6

Please refer to Figure 6, which illustrates an example of a one-sided specification where the ultimate goal would be to have a value of zero, i.e. less is better, such as with batch gel levels or residual monomer.

### Example 7

Please refer to Figure 7, which illustrates A.Q.I.s can also be calculated at different levels of aggregation.

### Example 8

Please refer to Figure 8, which illustrates that to facilitate this type of analysis, the PPQM system presents the Average Quality Index in the form of a control chart.

### Example 9

Please refer to Figure 9, which illustrates the method of the invention also permits comparisons within dimensions such as between manufacturing locations, kettle to kettle, and so on.

## Claims

1. A method of monitoring and assessing production batch processes comprising the steps of :
(a) defining a quality index based upon parameters comprising: (i) a target value of the property, (ii) values below the target value of the property and (iii) values above the target value of the property; and
(b) applying a specified inverse quadratic loss function to transform each individual property measurement into a unitless quality index;
wherein the quality index takes on a maximum value of 100 when the test result is exactly on target, and its value decreases quadratically to negative infinity as the property moves farther away from target.

2. An automated method according to claim 1.

3. The method according to claim 1 for monitoring a continuous production process.

4. The automated method according to claim 2, wherein results are stored and retrieved for comparison from a computer database.

5. A system for monitoring and assessing production batch processes comprising: a quality index defined by parameters further comprising: a target value of the property, values below the target value of the property and values above the target value of the property; and applying a specified inverse quadratic loss function to transform each individual property measurement into a unitless quality index;
wherein the quality index takes on a maximum value of 100 when the test result is exactly on target, and its value decreases quadratically to negative infinity as the property moves farther away from target.
